# EUROPEAN PATENT SPECIFICATION

(11) **EP 2 439 457 B1**
(45) Date of publication and mention of the grant of the patent: **27.07.2016**
(21) Application number: 11184414.8
(22) Date of filing: 07.10.2011
(51) Int. Cl.: F24H 1/06, F24H 4/02, F24H 9/20

(54) **Portable mobile heat generator**
Portabler mobiler Wärmegenerator
Générateur thermique mobile portable

(30) Priority: 11.10.2010 IT PD20100301
(43) Date of publication of application: 11.04.2012
(73) Proprietor: RM Sistemi S.r.l., 30037 Salzano (IT)
(72) Inventor: Ciacchi, Claudio, 30175 Marghera (Venezia) (IT)
(74) Representative: Petruzziello, Aldo

(56) References cited:
- EP-A1- 1 420 129
- WO-A1-2004/026708
- CN-A- 101 737 971
- FR-A1- 2 627 260
- FR-A1- 2 931 226
- GB-A- 2 065 334
- US-A- 5 170 936
- ANONYMOUS: 'Technologie Direktverdampfung / Wasser' SCHEMA ERDKOLLEKTOR- WÄRMEPUMPE MIT FUSSBODENHEIZUNG INKL. STANDARDKOMPONENTEN 30 April 2004, XP055146368

## Description

The present invention relates to mobile heat generators and in particular concerns a new portable mobile heat generator with heat pump, having an automated local control unit and a remote control and command unit.

Mobile heat generators are known, which are powered by electricity and have a system of heating with electrical resistors and manual control of the temperature. A portable mobile heat generator according to the preamble of claim 1 is known from FR 2627260 A1. Said mobile heat generators can be used in the case of malfunctioning of the boiler heating system or during the work of maintenance or replacement of the components.

They can also be used in particular during the installation of floor heating systems and for testing these systems before start-up.

In particular they can also be used for pre-heating floor heating pipes and for facilitating their laying, for the heating and the drying of the footing.

Said mobile heat generators moreover can be used in particular on a temporary basis for the heating and for preventing the freezing of newly constructed buildings or those being renovated, in the absence of functioning of the normal heating system.

Said mobile heat generators are powered electrically and are regulated manually via a thermostat.

Said mobile heat generators comprise a system of electrical resistors for heating the water, a pump for circulating the water, means of connection with the pipes of the heating system and means for controlling the temperature.

Disadvantages of mobile heat generators with resistors of the known type are the low yields which entail high consumption of electrical energy which may cause overloads with consequent interruptions of the electrical power supply and the obvious difficulties which derive therefrom, in addition to potential problems of safety on site and in the accessible areas.

Moreover, normally, the control of the temperature and of the functioning of the cycles of thermal shock does not take place automatically but must be performed and assisted by one or more members of staff.

Any faults during the phase of installation and of testing, moreover, are not in any way recorded or memorised and may therefore be unnoticed by the tester or operator, annulling the guarantee of success of the process.

FR 2627260 describes an installation of a heating unit, prefabricated and integrated in a container, which is transported to the place where it has to be installed and used to supply permanently the heating system of a building.

CN 101737971 describes an open loop device for heating water, defined by a mobile solar heat pump water equipment. Said equipment comprises a rolling device, a machine room, an air source heat pump, a solar heating device and a hot storage tank; said solar heating device is in communication loop with the water storage tank to supply hot water to a shower head.

The object of this document is to avoid laborious and costly assembly, at the place of use, of single components of a heating unit installation.

The object of the invention is that of avoiding the disadvantages of the mobile generators with electrical resistors of the prior art (energy-gobbling, not controlled, less safe, untried).

More particularly, an object of the invention is that of performing the heating of the water of the heating system of a building or of at least one housing unit in a completely automated manner, also providing continuous controls of all the parameters of operation, which may be memorised for the constant control, also remote.

Another object of the present invention is that of certifying all the phases of functioning.

Another object of the present invention is that of reducing drastically the energy consumption and therefore the costs, with therefore the possibility of use also with common domestic connections with meters at 3kW.

Another object again of the present invention is that of reducing the use of labour, automating all the due controls.

Another object of the present invention is that of performing in automated mode the filling of the heating system itself.

Another object of the present invention is that of allowing the control, the memorisation and the communication of all the data of functioning, thus allowing timely intervention in the case of malfunctionings or faults, which are detected and communicated to a remote command and control unit, for example via GSM.

These and other objects, direct and complementary, are achieved by the new mobile heat generator according to the invention, which can be used in particular in emergency situations, during operations of repair to heating systems of buildings, during the installation, the repair, the maintenance and the testing of floor heating systems, where testing refers to a cycle of progressive starting-up of the system in heating mode to check on the function of the system itself and also to dry the footing and make it stable and therefore suitable for the laying of the flooring, which has the features of the annexed independent claim 1.

Advantageous embodiments of the invention are given in the dependent claims.

The present invention guarantees testing of the floor systems and of the relative footing above also pursuant to current regulations.

The new generator comprises in its main parts at least one heat pump which can be connected to the hydraulic circuit of the heating system, a local unit of gradual control of said heat pump, suitable for commanding and controlling the cycles and the parameters of functioning of said heat pump, and a possible remote command and control unit suitable for receiving the functioning data of said heat pump for example via a GSM system or via modem.

Said heat pump is conveniently of the air-to-water type with a refrigerant circuit and is connected to a hydronic circuit, for the air-to-water heat exchange, and the circulation with accumulation of the heated water, said hydronic circuit being connected to a mixing circuit for the temperature regulation of the heated water and the sending of the same to the hydraulic circuit of the heating system.

The compressor of the refrigerant circuit of the heat pump can be of the on/off type or with inverter.

Said local control unit, or PLC, controls the parameters and the cycles of functioning of said heat pump, to actuate in an automatic and programmable manner the cycles of functioning of the same heat pump.

In particular, said local unit controls the parameters of temperature, the cycles of actuation and the other components of the generator such as pressure transducer, system filling solenoid valves, air separator, flow switch, differential pressure switch, pump and one or more sensors.

In particular it is provided for the generator to comprise also one or more sensors of the ambient temperature and of the temperature inside the circuit, one or more sensors of functioning of the refrigerant circuit, of the hydronic circuit, of the mixing circuit, one or more humidity sensors.

One or more of said temperature sensors are preferably functioning in radio frequency and therefore can be freely positioned and communicating with said local control unit. Said local control unit also comprises preferably at least one display for visualisation of the parameters, of the data of functioning, of the cycles of functioning, of possible failures, faults or malfunctionings, etc.

It is also provided for said control unit to provide for the actuation of one or more malfunctioning alarms, for example due to lack of supply, malfunctioning of the refrigerant circuit, malfunctioning of the hydronic circuit, and also anomalous pressure values or block of the circulation, malfunctionings of the mixing circuit, for example of the flow switch or of the differential pressure switch or anomalous values of excessively high temperature.

The remote command and control unit communicates with said local unit in remote mode, for example via GSM, and can therefore send signals of actuation/de-actuation and receive and file all the data of functioning of the heat pump and of the generator in general, all the data coming from the sensors and all the alarms which may have been actuated.

In this way it is possible to intervene promptly in the case of malfunctionings and faults detected.

The remote unit also makes available all the data for the check and certification of the testing performance and of the regularity of all the parameters.

It can be provided for said remote unit to communicate with two or more of said local units, each one associated with at least one heat pump.

In this way it is possible to perform simultaneously for example the testing of independent heating systems of several housing units, for example of a single building, and simultaneously controlling all the parameters with the possibility of intervening in remote mode for any problem.

This possibility considerably reduces the times of checking of the systems and the use of labour on site.

Further features of the invention will be made clearer by the following detailed description, referred to one of its embodiments purely by way of a non-limiting example, illustrated in the accompanying drawings, in which:
Figure 1 is a schematic perspective view showing the portable mobile heat generator according to the invention, connected to three radiating circuits of heating.
Figure 2 shows a simplified electrical hydraulic diagram of the heat generator of Figure 1.

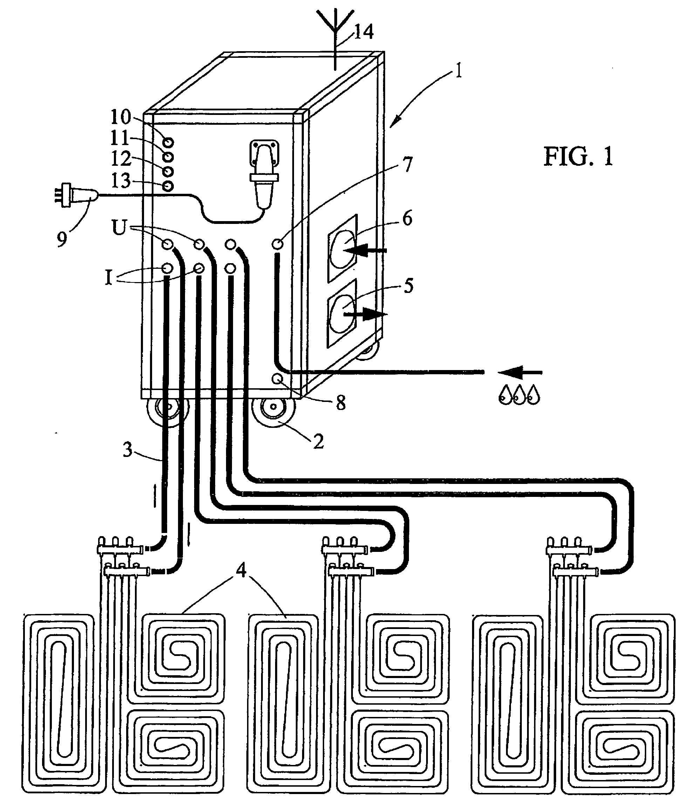

Figure 1 shows the casing 1 for containing the portable heat generator according to the invention, mounted on wheels 2 to facilitate transport thereof.

Naturally the shape of the casing 1 shown in the drawing is purely an example and it can be varyingly shaped without thereby departing from the scope of the invention defined by the claims. To give an idea of the portability of the mobile heat generator according to the invention, the casing 1, which in the depiction shown is parallelepiped in shape, has dimensions of approximately 60 x 60 by 110 cm.

The portable heat generator according to the invention is particularly suitable for the testing of floor heating systems before start-up and for the drying of the footing before laying of the flooring, implementing very specific thermal cycles laid down by current regulations. Figure 1 shows an example of this use of the heat generator according to the invention, connected by means of pipes 3 to three different floor radiating circuits 4. Inlet and outlet unions are provided on the casing 1 of the generator for the connection to the various radiating circuits, denoted respectively by the letters I and U.

Naturally the number of radiating circuits or heating systems which can be managed by the heat generator according to the invention can be different from that illustrated in Figure 1.

This drawing schematically shows an air inlet 6 and an air outlet 5 of the refrigerant circuit of the heat pump, which will be described in greater detail herein below.

On the casing 1 a union 7 is also provided for the input of the mains water for the filling of the system and a drain hole 8. An electrical supply cable 9 and various command keys, such as for example a start key 10, a system filling key 11, a cycle start key 12 and a stop key 13 can also be seen.

The functioning of the generator is interlocked with a control unit, such as a PLC provided in the casing 1, which has been programmed to perform the cycle of functioning required.

An aerial 14 can also be provided on the casing 1 for the connection with the remote command and control unit.

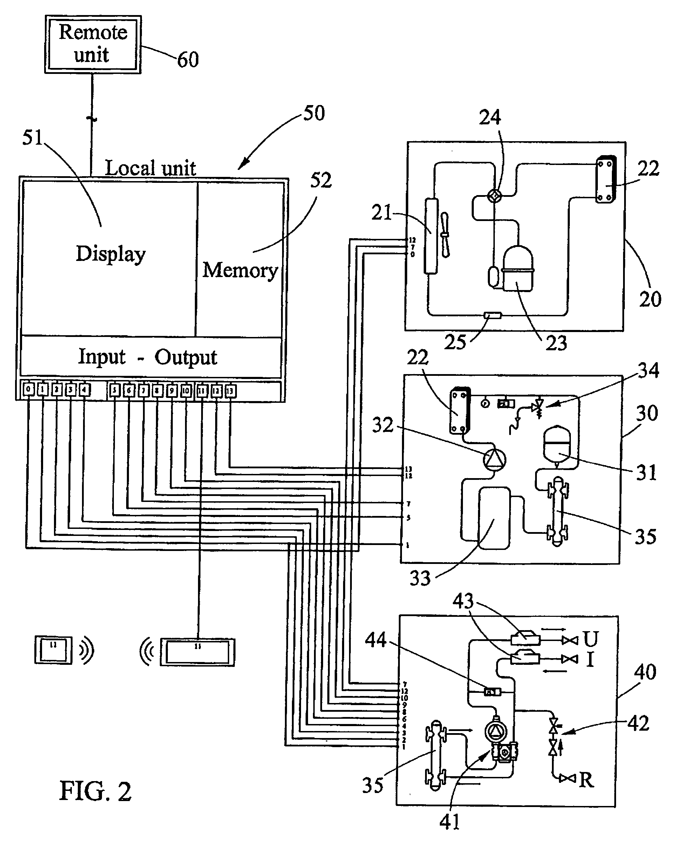

Referring now to Figure 2, a more detailed description will be given of the circuit diagram of the heat generator according to the invention.

The heat generator comprises at least one heat pump conveniently of the air to water type, i.e. which uses air to heat the water of a hydraulic circuit.

Figure 2 shows the refrigerant circuit of the heat pump, denoted by reference numeral 20, which in a manner in itself known comprises, as essential components, a evaporator 21, an condenser 22 and a compressor 23. The drawing also shows a fourway valve 24 for the deviation of the fluid and a lamination valve 25.

The refrigerant circuit 20 of the heat pump is followed by a hydronic circuit denoted by 30, wherein the hot water in output from the condenser 22 is made to recirculate by means of a pump 32. In the hydronic circuit a storage tank 33 is provided for the surplus water and an expansion vessel 31, upstream whereof a safety valve 34 is positioned, which intervenes in the case of high pressures.

The fluid that recirculates in the hydronic circuit 30 goes to a compensation manifold 35 which connects to the heating system by means of a mixing circuit indicated by the block 40 in Figure 2.

This mixing circuit comprises a mixing valve denoted by reference numeral 41, which performs a mixing of the hot water coming from the hydronic circuit with the water of the heating system coming from the inlet I so that water at the established temperature is fed into the system through the outlet U. The arrows in the drawing indicate the directions of flow. R indicates the supply from the water mains or from an auxiliary tank for the feeding of water in the system in the case of leaks or for filling the system, through valves 42. On the inlet I and outlet U conduits relief valves 43 are provided for the air which may be present in the conduits. A flow switch 44 checks the possible presence of air bubbles.

Figure 2 shows schematically also the electrical part of the heat generator according to the invention.

In particular a local unit 50 of automated control of the heat generator is shown, whereof the drawing shows a display 51 and a memory 52, as well as a plurality of input and output connections, numbered from 0 to 13, to the refrigerant 20, hydronic 30 and mixing 40 circuits for the exchange of signals. In particular sensors of temperature, pressure, flow, humidity, etc. are provided in the various circuits, which send constantly the relative measurements of parameters to the local unit 50 which, on the basis of the data received, commands the various members of the generator, such as pumps, compressors, solenoid valves, flow switch, and so on.

On the local unit 50 the work cycle of the heat generator to be carried out is set for the testing of floor heating systems and the footing above, performing a progressive start-up cycle of the heating system in heating mode to check on its function and dry the footing. The operating mode is visualised on the display 51, where possible faults are also reported.

Figure 2 also shows schematically a connection in radio frequency, in particular the number 11, between a sensor, for example of temperature, possibly external to the heat generator, and the local unit 50.

The local unit 50 is also associated to a remote command and control unit 60 which communicates with it, for example via GSM or via modem. The remote unit 60 can therefore send signals of actuation/de-actuation and receive and file all the data of functioning of the heat generator, in order to be able to intervene promptly in the case of malfunotionings or faults detected.

Via the remote unit 60, which can communicate with several local units, each one associated to a heat generator according to the invention, it is possible to arrange all the data for the checking and the certification of the performed testing and of the regularity of the various parameters.

From what has been disclosed the advantages appear clear of the portable mobile generator with heat pump according to the invention, which is compact and economical and which allows the performing of the heating of the water in the heating system in a completely automated manner, with continuous controls of all the working parameters, which may be memorised for the constant control also in remote mode and therefore subsequently certified and demonstrated. The invention in fact allows the demonstrable guaranteeing of the performed heating of the various type footings, according to various modes which can be preset and also according to the methods provided by current regulations on the subject.

Naturally the invention is not limited to the particular embodiment previously described and illustrated in the accompanying drawings, but numerous detail changes can be made thereto, within the reach of the person skilled in the art, without thereby departing from the scope of the invention itself, defined by the annexed claims.

## Claims

1. Portable mobile heat generator, particularly suitable for the testing of floor heating systems and relative footing, comprising a casing (1) mounted on wheels (2), which can be connected by means of inlet (I) and outlet (U) unions to at least one hydraulic circuit of a heating system (4), at least one heat pump with refrigerant circuit (20) provided with a compressor (23), an evaporator (21) and a condenser (22), at least one hydronic circuit (30) comprising a pump (32) for the recirculation of the hot water in output from said condenser (22), **characterised in that** said heat generator comprises:
- a storage tank (33) for the surplus water and an expansion vessel (31) provided in the hydronic circuit, upstream whereof is positioned a safety valve (34) suitable for intervening in case of high pressure,
- at least one mixing circuit (40), comprising a mixing valve (41), which can perform a mixing of the hot water coming from the hydronic circuit with the water of said at least one hydraulic circuit of the heating system (4) coming from an inlet (I) to feed water at the required temperature into said at least on hydraulic circuit of the heating system (4) via a corresponding outlet (U);
- at least one local control unit (50), configured for commanding and controlling the cycles and the parameters of functioning of said heat pump and the relative refrigerant (20), hydronic (30) and mixing (40) circuits and performing a progressive start-up cycle of the heating system to check on its function and dry the footing.

2. Portable mobile heat generator according to claim 1, **characterised in that** said compressor (23) of the refrigerant circuit (20) of the heat pump is of the on/off type or with inverter, to make the temperature of the hot water in output from the condenser (22) more stable.

3. Portable mobile heat generator according to claim 1 or 2, wherein a supply (R) is provided from the water mains or from storage tank to said mixing circuit (40), and relief valves (43) are provided on the inlet (I) and outlet (U) conduits..

4. Portable mobile heat generator according to any one of the preceding claims, **characterised in that** it provides in its interior sensors of temperature, pressure, flow, humidity and optionally at least one external sensor of temperature, suitable for sending constantly the relative measurements of parameters to said local unit (50) which, on the basis of the data received, commands the various members of the generator.

5. Portable mobile heat generator according to any one of the preceding claims, wherein said local unit (50) comprises at least one display (51) for the visualisation of the functioning cycles and for the reporting of possible faults, and a memory (52) for the recording of the performed cycles.

6. Portable mobile heat generator according to any one of the preceding claims, **characterised in that** at least one of said sensors communicates with the local unit (50) in radio frequency.

7. Portable mobile heat generator according to any one of the preceding claims, **characterised in that** it comprises also a remote unit (60) communicating with said local unit (50) for the remote control and command of the heat generator and for receiving and filing the functioning data of the same and the measurements performed by the various sensors.

8. Portable mobile heat generator according to claim 7, wherein said remote unit (60) communicates with said local unit (50) via GSM or modem.

## Patentansprüche

1. Portabler mobiler Wärmegenerator, insbesondere geeignet zum Testen von Bodenheizungssystemen und jeweiliger Fußfläche, umfassend ein Gehäuse (1), das auf Rädern (2) angebracht ist und mithilfe von Einlass- (I) und Auslass- (U) Verbindungen mit zumindest einem Hydraulikkreislauf eines Heizsystems (4) verbunden werden kann, zumindest eine Wärmepumpe mit einem Kühlmittelkreislauf (20), der mit einem Verdichter (23), einem Verdampfer (21) und einem Kondensator (22) versehen ist, zumindest einen Hydronikkreislauf (30), der eine Pumpe (32) für die Rückführung des Heißwassers im Auslass vom Kondensator (22) umfasst, **dadurch gekennzeichnet, dass** der Wärmegenerator Folgendes umfasst:
- einen Speichertank (33) für das überschüssige Wasser und ein Expansionsgefäß (31), die im Hydronikkreislauf vorgesehen sind, wobei stromaufwärts davon ein Sicherheitsventil (34) angeordnet ist, das zum Eingreifen im Falle hohen Drucks geeignet ist,
- zumindest einen Mischkreislauf (40), der ein Mischventil (41) umfasst, welches ein Mischen des Heißwassers, das vom Hydronikkreislauf kommt, mit dem Wasser des zumindest einen Hydraulikkreislaufs des Heizsystems (4), das von einem Einlass (I) kommt, zum Zuführen von Wasser auf der erforderlichen Temperatur in den zumindest einen Hydraulikkreislauf des Heizsystems (4) über einen entsprechenden Auslass (U) durchführt,
- zumindest eine lokale Steuereinheit (50), die zum Lenken und Steuern der Zyklen und der Funktionsparameter der Wärmepumpe und der Funktionsparameter der jeweiligen Kühlmittel- (20), Hydronik- (30) und Misch- (40) Kreisläufe und Durchführen eines progressiven Anlaufzyklus des Heizsystems zum Prüfen seiner Funktion und Trocknen der Fußfläche konfiguriert ist.

2. Portabler mobiler Wärmegenerator nach Anspruch 1, **dadurch gekennzeichnet, dass** der Verdichter (23) des Kühlmittelkreislaufs (20) der Wärmepumpe von der Ein/Aus-Art oder mit Wechselrichter ist, um die Temperatur des Heißwassers im Auslass vom Kondensator (22) stabiler herzustellen.

3. Portabler mobiler Wärmegenerator nach Anspruch 1 oder 2, wobei eine Zufuhr (R) vom Wassernetz oder vom Speichertank zum Mischkreislauf (40) vorgesehen ist und Entlastungsventile (43) an den Einlass- (I) und Auslass- (U) Leitungen vorgesehen sind.

4. Portabler mobiler Wärmegenerator nach einem der vorhergehenden Ansprüche, dadurch gekenntzeichnet, dass er in seinem Inneren Temperator-, Druck-, Strömungs-, Feuchtigkeitssensoren und optional zumindest einen externen Temperatursensor vorsieht, die zum konstanten Senden der jeweiligen Messungen von Parametern zur lokalen Einheit (50) geeignet sind, welche die verschiedenen Glieder des Wärmegenerators auf Grundlage der empfangenen Daten lenkt.

5. Portabler mobiler Wärmegenerator nach einem der vorhergehenden Ansprüche, wobei die lokale Einheit (50) zumindest eine Anzeige (51) zur Visualisierung der Funktionszyklen und zum Melden von möglichen Fehlern und einen Speicher (52) zum Aufzeichnen der durchgeführten Zyklen umfasst.

6. Portabler mobiler Wärmegenerator nach einem der vorhergehenden Ansprüche, **dadurch gekennzeichnet, dass** zumindest einer der Sensoren mit der lokalen Einheit (50) auf Hochfrequenz kommuniziert.

7. Portabler mobiler Wärmegenerator nach einem der vorhergehenden Ansprüche, **dadurch gekennzeichnet, dass** er außerdem eine entlegene Einheit (60) umfasst, die mit der lokalen Einheit (50) zur Fernsteuerung und -lenkung des Wärmegenerators kommuniziert, und zum Empfangen und Archivieren der Funktionsdaten desselben und der Messungen, die durch die verschiedenen Sensoren durchgeführt werden.

8. Portabler mobiler Wärmegenerator nach Anspruch 7, wobei die entlegene Einheit (60) über GSM oder Modem mit der lokalen Einheit (50) kommuniziert.

## Revendications

1. Générateur thermique mobile portable, particulièrement adéquat pour le test des systèmes de chauffage par le sol et de la semelle afférente, comprenant un caisson (1) monté sur roues (2), qui peut être raccordé au moyen de conduites d'entrée (I) et de sortie (U) à au moins un circuit hydraulique d'un système de chauffage (4), au moins une pompe à chaleur avec un circuit de fluide réfrigérant (20) pourvue d'un compresseur (23), un évaporateur (21) et un condensateur (22), au moins un circuit hydronique (30) comprenant une pompe (32) pour la recirculation de l'eau chaude à la sortie dudit condensateur (22), **caractérisé en ce que** ledit générateur thermique comprend :
- un réservoir de stockage (33) pour le surplus d'eau et un vase d'expansion (31) prévu dans le circuit hydronique, en amont duquel est positionnée une soupape de sécurité (34) adéquate pour intervenir en cas de haute pression,
- au moins un circuit de mélange (40), comprenant une soupape de mélange (41) qui peut effectuer un mélange de l'eau chaude provenant du circuit hydronique avec l'eau d'au moins un circuit hydraulique du système de chauffage (4) provenant d'une entrée (I) pour alimenter l'eau à la température requise dans ledit au moins un circuit hydraulique du système de chauffage (4) via une sortie correspondante (U) ;
- au moins une unité de commande (50), configurée pour commander le cycle et les paramètres de fonctionnement de ladite pompe à chaleur et du fluide de refroidissement afférent (20), des circuits hydronique (30) et de mélange (40) et effectuer un cycle de démarrage progressif du système de chauffage pour vérifier son fonctionnement et sécher la semelle.

2. Générateur thermique mobile portable selon la revendication 1, **caractérisé en ce que** ledit compresseur (23) du circuit de fluide de refroidissement (20) de la pompe à chaleur est du type on/off ou avec onduleur, pour rendre plus stable la température de l'eau chaude à la sortie du condensateur (22).

3. Générateur thermique mobile portable selon la revendication 1 ou 2, dans lequel une alimentation (R) est prévue à partir de la conduite d'eau principale ou du réservoir de stockage vers ledit circuit de mélange (40) et des soupapes de détente (43) sont prévues sur les conduites d'entrée (I) et de sortie (U).

4. Générateur thermique mobile portable selon une quelconque des revendications précédentes, caractérisé ce qu'il fournit dans son intérieur des capteurs de température, pression, débit, humidité et optionnellement au moins un capteur externe de température adéquat pour envoyer constamment les mesures relatives des paramètres à ladite unité locale (50), qui, sur la base des données reçues, commande les divers éléments du générateur.

5. Générateur thermique mobile portable selon une quelconque des revendications précédentes, dans lequel ladite unité locale (50) comprend au moins un écran (51) pour la visualisation des cycles de fonctionnement et pour le rapport des éventuelles défaillances, et une mémoire (52) pour l'enregistrement des cycles effectués.

6. Générateur thermique mobile portable selon une quelconque des revendications précédentes, **caractérisé en ce que** au moins un desdits capteurs communique avec l'unité locale (50) en radiofréquence.

7. Générateur thermique mobile portable selon une quelconque des revendications précédentes, **caractérisé en ce qu'**il comprend aussi une unité distante (60) communiquant avec ladite unité locale (50) pour la commande à distance du générateur thermique et pour recevoir et journaliser les données de fonctionnement de ce dernier et les mesures effectuées par les divers capteurs.

8. Générateur thermique mobile portable selon la revendication 7, dans lequel ladite unité distante (60) communique avec ladite unité locale (50) via GSM ou modem.
